(19) Europäisches Patentamt
European Patent Office
Office européen des brevets

(11) **EP 2 435 794 B1**

(12) **EUROPÄISCHE PATENTSCHRIFT**

(45) Veröffentlichungstag und Bekanntmachung des Hinweises auf die Patenterteilung:
**26.11.2014 Patentblatt 2014/48**

(21) Anmeldenummer: **10728698.1**

(22) Anmeldetag: **07.07.2010**

(51) Int Cl.:
***G01D 5/20*** *(2006.01)*

(86) Internationale Anmeldenummer:
**PCT/EP2010/059689**

(87) Internationale Veröffentlichungsnummer:
**WO 2011/003928 (13.01.2011 Gazette 2011/02)**

(54) **ANORDNUNG UND VERFAHREN ZUR BESTIMMUNG EINER WINKELSTELLUNG**

ARRANGEMENT FOR AND METHOD OF DETERMINING AN ANGULAR POSITION

DISPOSITIF ET PROCÉDÉ POUR DÉTERMINER UNE POSITION ANGULAIRE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **07.07.2009 DE 102009032095**

(43) Veröffentlichungstag der Anmeldung:
**04.04.2012 Patentblatt 2012/14**

(73) Patentinhaber: **Conti Temic Microelectronic GmbH**
**90411 Nürnberg (DE)**

(72) Erfinder:
• **EHRMANN, Martin**
**90480 Nürnberg (DE)**
• **WAGNER, Bernhard**
**90489 Nürnberg (DE)**

(74) Vertreter: **Bonn, Roman Klemens**
**Continental Automotive GmbH**
**Patente und Lizenzen**
**Postfach 22 16 39**
**80506 München (DE)**

(56) Entgegenhaltungen:
**EP-A- 0 779 607      DE-A1- 10 162 196**
**GB-A- 2 448 350**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Anordnung und ein Verfahren zur Bestimmung der Winkelstellung beispielsweise eines rotierenden Gegenstandes.

Die Winkelstellung beispielsweise einer rotierenden Maschine wird häufig durch Verwendung eines Sensors erfasst, der mittels induktiver Kopplung aus einer zeitlich veränderlichen, periodischen Eingangsgröße zwei in Abhängigkeit der Winkelstellung der beispielsweise rotierenden elektrischen Maschine Ausgangsgrößen bildet, wobei die Amplituden der zeitlich periodischen Ausgangsgrößen von der zu erfassenden Winkelstellung in unterschiedlicher Weise abhängen. Bevorzugte technische Ausführungsformen derartiger Sensoren sind beispielsweise Resolver oder Variable Reluctance (VR)-Sensoren, bei welchen üblicherweise eine Erregung mittels eines zeitlich sinusförmigen elektrischen Signals erfolgt, und die Amplituden der zwei ebenfalls zeitlich sinusförmigen Ausgangssignale in Abhängigkeit der zu erfassenden Winkelstellung zum Einen beispielsweise sinusförmig, zum Anderen cosinusförmig moduliert werden (wie etwa bei Resolvern mit einer 90 Grad gegeneinander verdrehten Anordnung der Sekundärwicklungen).

Die sinusförmige Spannung an der ersten Sekundärwicklung errechnet sich dabei zu

$$U_S(t) = a \cdot U_0 \cdot \sin(w_e \cdot t + \beta) \cdot \sin(\alpha),$$

und

die cosinusförmige Spannung an der zweiten Sekundärwicklung errechnet sich zu

$$U_C(t) = a \cdot U_0 \cdot \sin(w_e \cdot t + \beta) \cdot \cos(\alpha),$$

wobei

$w_e$ die Erregerkreisfrequenz, t die Zeit, $U_0$ die Erregeramplitude, $\alpha$ der Drehwinkel der Maschine, $\beta$ der Phasenwinkel zwischen Erregung und den Abgriffen an den Sekundärspulen und a der Übertragungsfaktor der Amplitude zwischen Primärwicklung und den Sekundärwicklungen ist.

Mittels Auswertung der Sensorspannungen wird aus den an den Sekundärwicklungen gemessenen Werten $U_S(t)$ und $U_C(t)$ der gesuchte Winkel $\alpha$ bestimmt. Dabei gilt:

$$U_S(t)/U_C(t) = \sin(\alpha)/\cos(\alpha) = \tan(\alpha)$$

woraus sich der aktuelle Drehwinkel $\alpha$ ergibt. Nachteilig wirkt sich dabei aus, dass diese Vorgehensweise nur in den Fällen zu geeigneten Ergebnissen führt, in denen $\sin(w_e \cdot t + \beta)$ nicht in der Nähe des Nulldurchgangs liegt. Liegt $\sin(w_e \cdot t + \beta)$ in der Nähe des Nulldurchgangs, dann nehmen $U_S(t)$ und $U_C(t)$ sehr kleine Werte an bzw. gehen gegen Null und eine geeignete Auswertung ist bei dieser Winkelstellung nicht mehr möglich.

Eine Lösungsmöglichkeit gemäß Stand der Technik besteht darin, einen Abtastzeitpunkt für die beiden Ausgangssignale der Sekundärwicklungen so zu wählen, dass $\sin(w_e \cdot t + \beta)$ einen ausreichend großen Wert annimmt. Nachteilig wirkt sich dabei aus, dass der Zeitpunkt zur Bestimmung der Winkelstellung daher nicht mehr frei gewählt werden kann, sondern in einer bestimmten Phasenlage (und damit in bestimmtem zeitlichen Bezug) zur Erregungsspannung ausgeführt muss, um eine ausreichende Signalamplitude für die Auswertung zu erhalten.

Eine weitere Lösungsmöglichkeit gemäß Stand der Technik besteht darin, dass in einer vorzugsweise als integrierte Schaltung realisierten Anordnung mittels Phasenregelkreisen (PLL) eine Berechnung des aktuellen Winkels aus zeitlich zuvor ermittelten Werten für $U_S(t)$ und $U_C(t)$ durchgeführt wird. Nachteilig wirkt sich dabei aus, dass in PLL-Schaltungen bei sich ändernden Winkelgeschwindigkeiten sogenannte Schleppfehler entstehen. Bei zu hohen Winkelbeschleunigungen verläuft die PLL nicht mehr synchron und es kann kein geeignetes Signal zur Winkelbestimmung ermittelt werden.

Anordnungen zur Bestimmung der Winkelstellung sind beispielsweise in den Druckschriften GB 2 448 350 A und EP 0 779 607 A1 beschrieben.

Aufgabe der vorliegenden Erfindung ist es, eine Anordnung und ein Verfahren zur Bestimmung der Winkelstellung anzugeben, bei denen die genannten Nachteile vermieden werden.

Die Aufgabe wird gelöst durch eine Anordnung gemäß Anspruch 1 bzw. ein Verfahren gemäß Anspruch 8. Ausgestaltungen und Weiterbildungen des Erfindungsgedankens sind Gegenstand von Unteransprüchen.

Die Aufgabe wird insbesondere gelöst durch eine Anordnung und ein Verfahren zur Bestimmung der Winkelstellung mittels eines induktiven Sensors, bei denen aus dem Erregersignal der Primärwicklung des Sensors und den an dessen Sekundärwicklungen abgegriffenen Signalen durch Phasenschiebereinheiten drei zusätzliche Signale gebildet werden, die nach einer Abtastung einer Auswerteschaltung, die beispielsweise Vorzeichenermittlungseinheiten aufweist, zugeführt werden. Beispielsweise in der Auswerteschaltung kann aus den nunmehr sechs zur Verfügung stehenden Werten beispielsweise anhand einer entsprechenden Berechnungsvorschrift zu jedem beliebigen Zeitpunkt die aktuelle Winkelstellung der rotierenden Maschine bestimmt werden, ohne dass die oben genannten Nachteile auftreten.

Die Erfindung wird nachfolgend anhand der in den Figuren der Zeichnung dargestellten Ausführungsbeispiele näher erläutert. Es zeigt:

Figur 1       in einem Blockdiagramm eine Ausführungsform der erfindungsgemäßen Anordnung; und

Figur 2       in einem Ablaufdiagramm eine Ausführungsform des erfindungsgemäßen Verfahrens.

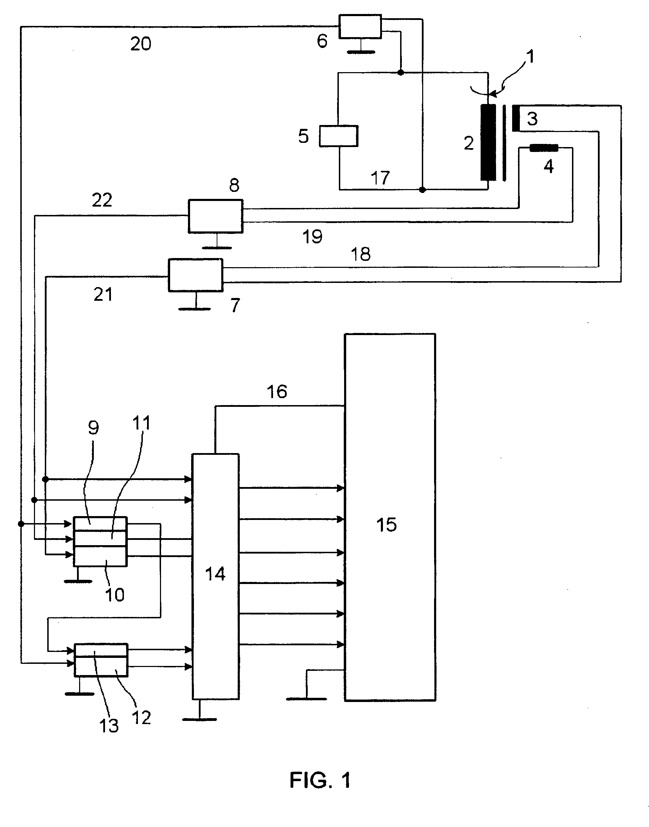

Figur 1 zeigt in einem Blockdiagramm eine Ausführungsform der erfindungsgemäßen Anordnung. Das zugehörige Verfahren zur Ermittlung der Winkelstellung wird dabei anhand der mathematischen Beziehungen, die an einem Resolver/VR-Sensor üblicherweise vorliegen, erläutert, kann aber auf jeden eingangs erläuterten Sensor angewandt werden. Die beispielhafte Anordnung weist einen induktiv gekoppelten Winkelsensor 1 auf, der mindestens eine primäre Eingangswicklung 2 und mindestens zwei sekundäre Ausgangswicklungen 3 und 4 aufweist, wobei die induktive Kopplung zwischen der Primärseite und den beiden sekundären Seiten in Abhängigkeit des Drehwinkels einer nicht näher dargestellten rotierenden Maschine einen sinusförmigen beziehungsweise cosinusförmigen Verlauf aufweist. Als Beispiel sei hier ein üblicher Resolver angeführt.

Die Anordnung weist weiterhin eine Generatoreinheit 5 zur Erregung der Primärwicklung 2 mit einer im Allgemeinen zeitlich sinusförmigen Erregerspannung 17 auf. Weiterhin weist die Anordnung drei Subtrahiereinheiten 6, 7 und 8, drei Phasenschieber 9, 10 und 11, zwei Vorzeichenermittlungseinheiten 12 und 13, eine zur Signalabtastung vorgesehene Sample- und Hold-Einheit 14 und einen Prozessor 15 auf.

Wie in Figur 1 gezeigt ist die Generatoreinheit 5 verbunden mit der Primärwicklung 2 und der Subtrahiereinheit 6. Die Anschlüsse der Sekundärwicklung 3 sind mit Eingängen der Subtrahiereinheit 7 verbunden. Die Anschlüsse der Sekundärwicklung 4 sind mit Eingängen der Subtrahiereinheit 8 verbunden. Der Ausgang der Subtrahiereinheit 6 ist mit dem Eingang des Phasenschiebers 9 und mit dem Eingang der Vorzeichenermittlungseinheit 12 gekoppelt. Der Ausgang der Subtrahiereinheit 7 ist mit dem Eingang des Phasenschiebers 10 und mit einem Eingang der Sample- und Hold-Abtasteinheit 14 gekoppelt. Der Ausgang der Subtrahiereinheit 8 ist mit dem Eingang des Phasenschiebers 11 und mit einem Eingang der Sample- und Hold-Abtasteinheit 14 gekoppelt. Der Ausgang des Phasenschiebers 9 ist mit dem Eingang der Vorzeichenermittlungseinheit 13 gekoppelt. Die Ausgänge der Phasenschieber 10 und 11 und die Ausgänge der Vorzeichenermittlungseinheiten 12 und 13 sind schließlich mit weiteren Eingängen der Sample- und Hold-Abtasteinheit 14 gekoppelt.

Eine von der Generatoreinheit 5 in die Primärwicklung 2 eingespeiste sinusförmige Spannung 17 erzeugt über elektromagnetische Kopplung in der Sekundärwicklung 3 eine potentialfreie sinusförmige Spannung 18 und in der Sekundärwicklung 4 eine potentialfreie sinusförmige Spannung 19,wobei die Amplitude von 18 als Funktion des Drehwinkels gemäß einer Sinusfunktion moduliert wird, die Amplitude von 19 als Funktion des Drehwinkels gemäß einer Cosinusfunktion moduliert wird, also gemäß den Klemmenbeziehungen an einem Resolver beziehungsweise Variable Reluctance-Sensors. Mittels der Subtrahiereinheit 6 wird die sinusförmige Erregerspannung 17 in eine auf Masse bezogene sinusförmige Erregerspannung 20 gewandelt. Mittels der Subtrahiereinheit 7 wird die zeitlich sinusförmige Spannung 19 der Sekundärwicklung 3 in eine auf die Masse der Anordnung bezogene zeitlich sinusförmige Spannung 21 gewandelt. Mittels der Subtrahiereinheit 8 wird die zeitlich sinusförmige Spannung 20 der Sekundärwicklung 4 in eine auf die Masse bezogene zeitlich sinusförmige Spannung 22 gewandelt.

Außerdem wird die auf Masse bezogene zeitlich sinusförmige Erregerspannung 20 mittels des Phasenschiebers 9 um 90 Grad in der Phase verschoben, das zeitlich sinusförmige Signal 21 wird mittels des Phasenschiebers 10 um 90 Grad in der Phase verschoben, und das zeitlich sinusförmige Signal 22 wird mittels des Phasenschiebers 11 um 90 Grad in der Phase verschoben. In der Vorzeichenermittlungseinheit 12 wird ein Signal mit dem Wert 1 erzeugt, wenn das Erregersignal 20 größer Null ist, andernfalls wird ein Signal mit dem Wert 0 erzeugt. In der Vorzeichenermittlungseinheit 13 wird ein Signal mit dem Wert 1 erzeugt, wenn das auf die Masse bezogene und um 90 Grad in der Phase verschobene Erregersignal des Phasenschiebers 9 größer Null ist, andernfalls wird ein Signal mit dem Wert 0 erzeugt.

In der Sample- und Hold-Abtasteinheit 14 werden zum Zeitpunkt des Empfangs eines Triggersignals 16 vom Prozessor 15 Abtastwerte der aus den Subtrahiereinheiten 7 und 8, den Phasenschiebern 10 und 11 und den Vorzeichenermittlungseinheiten 12 und 13 bereitgestellten Signalen gebildet. Diese sechs Signale werden dem Prozessor 15 als Recheneinrichtung zur weiteren Verarbeitung zur Verfügung gestellt, der daraus die zum Zeitpunkt des Empfangs des Triggersignals 16 durch die Sample- und Hold-Einheit 14 aktuelle Winkelstellung der rotierenden Maschine errechnet.

Die aktuelle Winkelstellung wird dabei beispielsweise errechnet zu

$$\alpha = \texttt{arctan(ab}_1/\texttt{ab}_2) + \pi\cdot\texttt{sign(ab}_2)\cdot\texttt{VZ\_EXITE},$$

wenn ein Wert G1 größer oder gleich einem Wert G2 ist, und zu

$$\alpha = \texttt{arctan(ab}_3/\texttt{ab}_4) + \pi\cdot\texttt{sign(ab}_4)\cdot\texttt{VZ\_EXITE90},$$

wenn G1 kleiner G2 ist. Dabei bezeichnet $\alpha$ die aktuelle Winkelstellung der rotierenden Maschine, n die Kreiszahl (ist beispielsweise 3,14159), VZ_EXITE den abgetasteten Signalwert der ersten Vorzeichenermittlungseinheit 12 und VZ_EXITE90 den abgetasteten Signalwert am Ausgang der zweiten Vorzeichenermittlungseinheit 13. Der Wert G1 = $ab_1{}^2 + ab_2{}^2$ und der Wert G2 = $ab_3{}^2 + ab_4{}^2$, wobei $ab_1$ den abgetasteten Signalwert am Ausgang der Subtrahiereinheit 7 , $ab_2$ den abgetasteten Signalwert am Ausgang der Subtrahiereinheit 8, $ab_3$ den abgetasteten Signalwert am Ausgang des Phasenschiebers 10 und $ab_4$ den abgetasteten Signalwert am Ausgang des Phasenschiebers 11 bedeutet. Mittels der Auswahl von ($ab_1$ ; $ab_2$) bzw. ($ab_3$ ; $ab_4$) anhand von G1 und G2 kann immer auf ein gut auswertbares Signal zugegriffen werden. Auf diese Weise lassen sich die genannten Nachteile nach dem Stand der Technik vermeiden und die Bestimmung der aktuellen Winkelstellung einer rotierenden Maschine ist zu jedem beliebigen Zeitpunkt und ohne Schleppfehler möglich. So ist beispielsweise bei einer Phasenverschiebung von 90 Grad (und ungradzahligen Vielfachen davon) dann ein Maximum (positiv, negativ) wenn das ursprüngliche Signal Null ist.

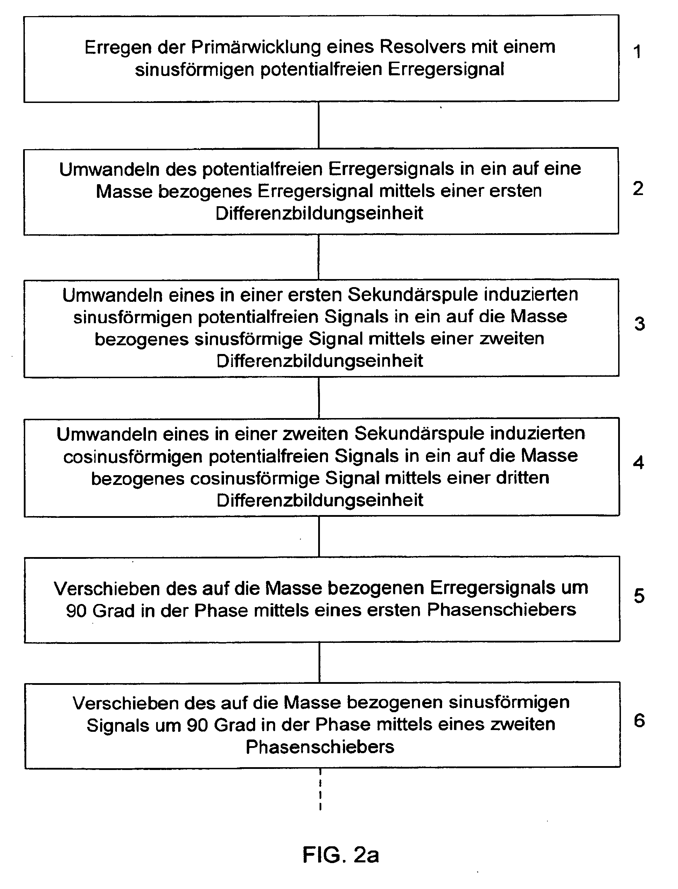

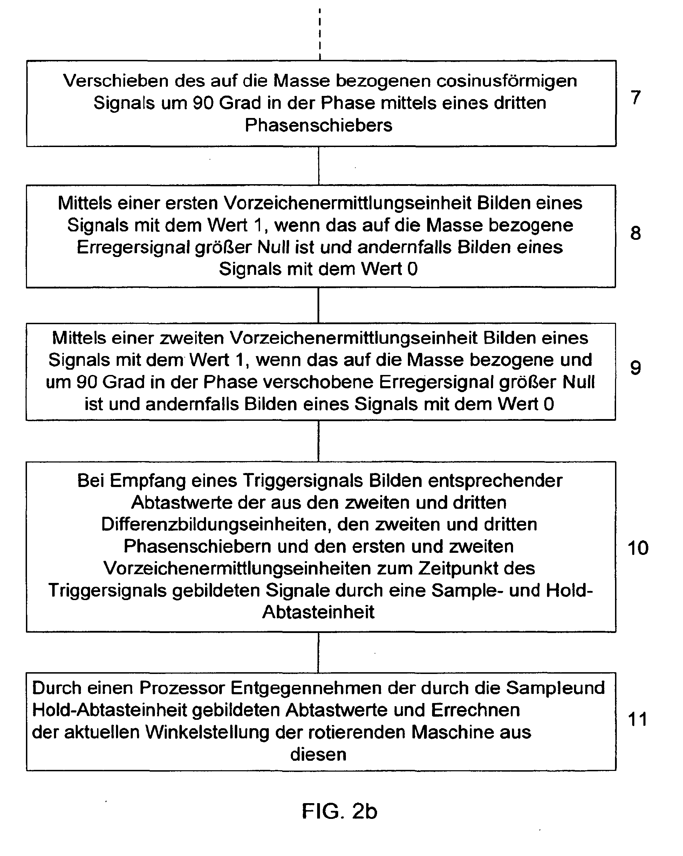

Die Figuren 2a und 2b zeigen beispielhaft ein Ablaufdiagramm des Verfahrens zur Bestimmung der aktuellen Winkelstellung einer rotierenden Maschine. In einem Schritt 1 wird eine Primärwicklung eines Resolvers mit einem zeitlich sinusförmigen Erregersignal erregt. Dieses Erregersignal wird in einem Schritt 2 mittels einer ersten Subtrahiereinheit in ein auf eine Masse bezogenes Erregersignal umgewandelt. In einem Schritt 3 wird ein in einer ersten Sekundärspule des Resolvers induziertes zeitlich sinusförmiges potentialfreies Signal mittels einer zweiten Subtrahiereinheit in ein auf die Masse bezogenes zeitlich sinusförmiges Signal umgewandelt. In einem Schritt 4 wird ein in einer zweiten Sekundärspule des Resolvers induziertes zeitlich sinusförmiges potentialfreies Signal mittels einer dritten Subtrahiereinheit in ein auf die Masse bezogenes zeitlich sinusförmiges Signal umgewandelt.

In einem Schritt 5 des Verfahrens wird das auf Masse bezogene Erregersignal mittels eines ersten Phasenschiebers um 90 Grad in der Phase verschoben. In einem Schritt 6 wird das auf Masse bezogene zeitlich sinusförmige Signal mittels eines zweiten Phasenschiebers um 90 Grad in der Phase verschoben. Das auf Masse bezogene zeitlich sinusförmige Signal wird in einem Schritt 7 mittels eines dritten Phasenschiebers um 90 Grad in der Phase verschoben. Mittels einer ersten Vorzeichenermittlungseinheit wird in Schritt 8 ein Signal mit dem Wert 1 gebildet, wenn das auf die Masse bezogene Erregersignal größer Null ist, andernfalls wird ein Signal mit dem Wert 0 gebildet. In einem Schritt 9 wird mittels einer zweiten Vorzeichenermittlungseinheit ein Signal mit dem Wert 1 gebildet, wenn das auf die Masse bezogene und um 90 Grad in der Phase verschobene Erregersignal größer Null ist, andernfalls wird ein Signal mit dem Wert 0 gebildet.

In einem Schritt 10 des Verfahrens werden durch eine Sample-und Hold-Einheit bei Empfang eines Triggersignals, dessen Zeitpunkt beliebig gewählt werden kann, Abtastwerte der aus den zweiten und dritten Subtrahiereinheiten, den zweiten und dritten Phasenschiebern und den ersten und zweiten Vorzeichenermittlungseinheiten zum Zeitpunkt des Triggersignals gebildeten Signale gebildet. In einem Schritt 11 werden durch einen Prozessor die durch die Sample-und Hold-Abtasteinheit gebildeten Abtastwerte entgegengenommen und es wird entsprechend der weiter oben beschriebenen mathematischen Vorgehensweise die aktuelle Winkelstellung der rotierenden Maschine aus diesen Abtastwerten errechnet.

Bei dem vorstehend beispielhaft erläuterten Verfahren ist die gezeigte Reihenfolge der Schritte nicht zwingend und kann in beliebiger Weise abgeändert werden. Bei dem zuvor erläuterten Beispiel einer erfindungsgemäßen Anordnung können beispielsweise auch die Subtrahiereinheiten 6, 7 und 8 weggelassen werden, wenn eine potentialfreie Messwerterfassung nicht benötigt wird.

**Patentansprüche**

1. Anordnung zur Bestimmung der aktuellen Winkelstellung eines um einen ortsfesten Punkt rotierenden Gegenstandes mittels eines induktiven Sensors (1), der mindestens eine Primärwicklung (2), die von einem Erregersignal (17) gespeist wird, und mindestens zwei damit induktiv gekoppelte Sekundärwicklungen (3,4) aufweist, wobei aufgrund der induktiven Kopplung in den beiden Sekundärwicklungen (3,4) in Abhängigkeit des Drehwinkels Signale mit einem periodischen.und phasenverschobenen Verlauf erzeugt werden,
drei jeweils einen Eingang und einen Ausgang aufweisenden Phasenschiebern (9, 10, 11) mit gleichen Phasenverschiebungen, von denen je einer eingangsseitig mit der Primärwicklung (2) beziehungsweise der ersten Sekundärwicklung (3) beziehungsweise der zweiten Sekundärwicklung (4) elektrisch gekoppelt ist, und
einer Auswerteeinheit (12, 13, 14, 15), die aus den Signalen an den Eingängen und an den Ausgängen der Phasenschieber (9, 10, 11) die Winkelstellung bestimmt.

2. Anordnung nach Anspruch 1, bei der das Erregersignal (17) zeitlich sinusförmig ist und in der ersten Sekundärwicklung (3) ein zeitlich sinusförmig moduliertes Signal (18) induziert wird, dessen Amplitude als Funktion des Drehwinkels der rotierenden Maschine gemäß einer Sinusfunktion moduliert wird, und in der zweiten Sekundärwicklung (4) ein zeitlich sinusförmiges Signal (19) induziert wird, dessen Amplitude als Funktion des Drehwinkels der rotierenden Maschine gemäß einer Cosinusfunktion moduliert wird.

3. Anordnung nach Anspruch 2, bei der die Auswerteeinheit (12, 13, 14, 15) aufweist:

   eine erste Vorzeichenermittlungseinheit (12), die ausgebildet ist, ein erstes Vorzeichensignal zu erzeugen, das angibt, ob das Erregersignal (20) kleiner Null ist oder nicht,
   einer zweiten Vorzeichenermittlungseinheit (13), die dazu ausgebildet ist, ein zweites Vorzeichensignal zu erzeugen, das angibt, ob das in der Phase verschobene Erregersignal (20) kleiner Null ist oder nicht,
   einer Sample- und Hold-Einheit (14), die ausgebildet ist, bei Empfang eines Triggersignals (16) entsprechende Abtastwerte aus den nicht-phasenverschobenen und mittels der Phasenschieber phasenverschobenen Signalen der ersten und zweiten Sekundärwicklungen (3, 4) und den Ausgangssignalen der ersten und zweiten Vorzeichenermittlungseinheiten (12, 13) zum Zeitpunkt des Empfangs des Triggersignals (16) zu bilden, und
   einer Recheneinrichtung (15), die eingerichtet ist, das Triggersignal (16) für die Sample- und Hold-Abtasteinheit (14) zu erzeugen und aus den von der Sample- und Hold-Einheit (14) gebildeten Abtastwerten die aktuelle Winkelstellung der rotierenden Maschine zu errechnen.

4. Anordnung nach Anspruch 3, bei der die Recheneinrichtung (15) eingerichtet ist, die aktuelle Winkelstellung zu errechnen zu

$$\alpha = \arctan(ab_1/ab_2) + \pi \cdot \text{sign}(ab_2) \cdot \text{VZ\_EXITE},$$

wenn ein Wert G1 größer oder gleich einem Wert G2 ist,
und zu

$$\alpha = \arctan(ab_3/ab_4) + \pi \cdot \text{sign}(ab_4) \cdot \text{VZ\_EXITE90},$$

wenn G1 kleiner G2 ist,
wobei $\alpha$ die aktuelle Winkelstellung ist, der Wert G1 = $ab_1^2 + ab_2^2$, der Wert G2 = $ab_3^2 + ab_4^2$, VZ_EXITE der abgetastete Signalwert der ersten Vorzeichenermittlungseinheit (12) ist, VZ_EXITE90 der abgetastete Signalwert der zweiten Vorzeichenermittlungseinheit (13) ist, $ab_1$ der abgetastete Signalwert der ersten Sekundärwicklung (3) ist, $ab_2$ der abgetastete Signalwert der zweiten Sekundärwicklung (3) ist, $ab_3$ der abgetastete Signalwert des Ausgangs des Phasenschiebers (10) ist und $ab_4$ der abgetastete Signalwert des Ausgangs des Phasenschiebers (11)ist.

5. Anordnung nach Anspruch 3 oder 4, bei der die Signale (17, 18, 19) der Primärwicklung (2) und der Sekundärwicklung (3, 4) potentialfrei sind und zusätzlich vorgesehen sind:

   eine erste Subtrahiereinheit (6), die ausgebildet ist,
   das Erregersignal (17) in ein auf Masse bezogenes Erregersignal (20) zu wandeln,
   eine zweite Subtrahiereinheit (7), die ausgebildet ist,
   das Signal (18) der ersten Sekundärwicklung (3) in ein auf Masse bezogenes Signal (21) zu wandeln, und
   eine dritte Subtrahiereinheit (8), die ausgebildet ist,
   das Signal (19) der zweiten Sekundärwicklung (4) in ein auf die Masse bezogenes Signal (22) zu wandeln.

**6.** Anordnung nach einem der vorherigen Ansprüche, bei der die Primärwicklung (2) mit einer das Erregersignal (17) erzeugenden Generatoreinheit (5) verbunden ist.

**7.** Anordnung nach einem der vorherigen Ansprüche, bei der die Phasenverschiebung sämtlicher Phasenschieber 90 Grad oder ein ungeradzahliges Vielfaches davon beträgt.

**8.** Verfahren zur Bestimmung der aktuellen Winkelstellung eines um einen ortsfesten Punkt rotierenden Gegenstandes mittels eines induktiven Sensors (1), der mindestens eine Primärwicklung (2), die von einem Erregersignal (17) gespeist wird, und mindestens zwei damit induktiv gekoppelte Sekundärwicklungen (3,4) aufweist, wobei aufgrund der induktiven Kopplung in den beiden Sekundärwicklungen (3,4) in Abhängigkeit des Drehwinkels Signale mit einem periodischen und phasenverschobenen Verlauf erzeugt werden, die Signale von der Primärwicklung (2) und den beiden Sekundärwicklungen (3, 4) phasenverschoben werden, und aus den nicht-phasenverschobenen und phasenverschobenen Signalen von der Primärwicklung (2) und den beiden Sekundärwicklungen (3, 4) die Winkelstellung bestimmt wird.

**9.** Verfahren nach Anspruch 8, bei dem das Erregersignal (17) zeitlich sinusförmig ist und in der ersten Sekundärwicklung (3) ein zeitlich sinusförmig moduliertes Signal (18) induziert wird, dessen Amplitude als Funktion des Drehwinkels der rotierenden Maschine gemäß einer Sinusfunktion moduliert wird, und in der zweiten Sekundärwicklung (4) ein zeitlich sinusförmiges Signal (19) induziert wird, dessen Amplitude als Funktion des Drehwinkels der rotierenden Maschine gemäß einer Cosinusfunktion moduliert wird.

**10.** Verfahren nach Anspruch 9, bei dem
ein erstes Vorzeichensignal erzeugt wird, das angibt, ob das Erregersignal (20) kleiner Null ist oder nicht, ein zweites Vorzeichensignal erzeugt wird, das angibt, ob das in der Phase verschobene Erregersignal (20) kleiner Null ist oder nicht,
Triggersignale (16) erzeugt werden,
bei Empfang der Triggersignale (16) entsprechende Abtastwerte aus den nicht-phasenverschobenen und phasenverschobenen Signalen der ersten und zweiten Sekundärwicklungen (3, 4) und den ersten und zweiten Vorzeichensignalen (12, 13) gebildet werden,
und aus den Abtastwerten die aktuelle Winkelstellung der rotierenden Maschine errechnet wird.

**11.** Verfahren nach Anspruch 10, bei dem die aktuelle Winkelstellung errechnet wird zu

$$\alpha = \texttt{arctan(ab}_1\texttt{/ab}_2\texttt{)+}\pi\cdot\texttt{sign(ab}_2\texttt{)}\cdot\texttt{VZ\_EXITE,}$$

wenn ein Wert G1 größer oder gleich einem Wert G2 ist,
und

$$\texttt{zu }\alpha = \texttt{arctan(ab}_3\texttt{/ab}_4\texttt{)+ }\pi\cdot\texttt{sign(ab}_4\texttt{)}\cdot\texttt{VZ\_EXITE90,}$$

wenn G1 kleiner G2 ist,
wobei $\alpha$ die aktuelle Winkelstellung ist, der Wert $G1 = ab_1^2 + ab_2^2$, der Wert $G2 = ab_3^2 + ab_4^2$, VZ_EXITE der abgetastete Signalwert des ersten Vorzeichensignals ist, VZ_EXITE90 der abgetastete Signalwert des zweiten Vorzeichensignals ist, $ab_1$ der abgetastete Signalwert der ersten Sekundärwicklung (3) ist, $ab_2$ der abgetastete Signalwert der zweiten Sekundärwicklung (4) ist, $ab_3$ der abgetastete Signalwert des Ausgangs des Phasenschiebers (10) ist und $ab_4$ der abgetastete Signalwert des Ausgangs des Phasenschiebers (11) ist.

**12.** Verfahren nach einem der Ansprüche 8 bis 11, bei dem die Signale an der Primärwicklung (2) sowie von den beiden Sekundärwicklungen (3, 4) um 90 Grad oder ein ungeradzahliges Vielfaches phasenverschoben werden.

**Claims**

**1.** Assembly for determining the current angular position of an object rotating around a stationary point, by means of an inductive sensor (1), which has at least one primary winding (2), which is fed from an excitation signal (17), and at least two secondary windings (3, 4) inductively coupled thereto, the inductive coupling causing signals to be generated with a periodic and phase-shifted waveform in the two secondary windings (3, 4) depending on the rotation angle,

three phase shifters (9, 10, 11) each with one input and one output, these phase shifters having the same phase shifts, each being electrically coupled on the input side with the primary winding (1) or the first secondary winding (3) or the second secondary winding (4) respectively, and

an evaluation unit (12, 13, 14, 15) which determines the angular position from the signals at the inputs and at the outputs of the phase shifters (9, 10, 11).

2. Assembly according to Claim 1, in which the excitation signal (17) is temporally sinusoidal and in the first secondary winding (3) a temporally sinusoidal modulated signal (18) is induced, whose amplitude is modulated as a function of the rotation angle of the rotating machine according to a sine function, and in the second secondary winding (4) a temporally sinusoidal signal (19) is induced, whose amplitude is modulated as a function of the rotation angle of the rotating machine according to a cosine function.

3. Assembly according to Claim 2, in which the evaluation unit (12, 13, 14, 15) has:

a first polarity sign determination unit (12), which is designed to generate a first sign signal which indicates whether or not the excitation signal (20) is less than zero,

a second polarity sign determination unit (13), which is designed to generate a second sign signal which indicates whether or not the phase-shifted excitation signal (20) is less than zero,

a sample and hold unit (14) which is designed, on receipt of a trigger signal (16) to form corresponding sample values from the signals which are not phase shifted and

those phase shifted by means of the phase shifters, of the first and second secondary windings (3, 4), and from the output signals of the first and second polarity sign determination units (12, 13) at the time of receiving the trigger signal (16), and

a computing device (15) which is set up to generate the trigger signal (16) for the sample and hold sampling unit (14) and to calculate the current angular position of the rotating machine from the sample values formed by the sample and hold unit (14).

4. Assembly according to Claim 3, in which the computing device (15) is set up to calculate the current angular position as

$$\alpha = \arctan(ab_1/ab_2) + \pi \cdot sign(ab_2) \cdot VZ\_EXITE,$$

if a value G1 is greater than or equal to a value G2, and
as

$$\alpha = \arctan(ab_3/ab_4) + \pi \cdot sign(ab_4) \cdot VZ\_EXITE90,$$

if G1 is smaller than G2,
where $\alpha$ is the current angular position, the value $G1 = ab_1^2 + ab_2^2$, the value $G2 = ab_3^2 + ab_4^2$, VZ_EXITE is the sampled signal value of the first polarity sign determination unit (12), VZ_EXITE90 is the sampled signal value of the second polarity sign determination unit (13), $ab_1$ is the sampled signal value of the first secondary winding (3), $ab_2$ is the sampled signal value of the second secondary winding (3), $ab_3$ is the sampled signal value of the output of the phase shifter (10) and $ab_4$ is the sampled signal value of the output of the phase shifter (11).

5. Assembly according to Claim 3 or 4, in which the signals (17, 18, 19) of the primary winding (2) and of the secondary winding (3, 4) are potential-free, and additionally provided are:

a first subtractor unit (6), which is designed to convert the excitation signal (17) into an excitation signal (20) referred to ground,

a second subtractor unit (7), which is designed to convert the signal (18) of the first secondary winding (3) into a signal (21) referred to ground, and

a third subtractor unit (8), which is designed to convert the signal (19) of the second secondary winding (4) into a signal (22) referred to ground.

6. Assembly according to one of the previous claims, in which the primary winding (2) is connected to a generator unit (5) which generates the excitation signal (17).

7. Assembly according to one of the previous claims, in which the phase shift of all phase shifters amounts to 90 degrees or an odd-numbered multiple thereof.

8. Method for determining the current angular position of an object rotating around a stationary point, by means of an inductive sensor (1), which has at least one primary winding (2), which is fed from an excitation signal (17), and at least two secondary windings (3, 4) inductively coupled thereto, the inductive coupling causing signals to be generated with a periodic and phase-shifted waveform in the two secondary windings (3, 4) depending on the rotation angle, the signals from the primary winding (2) and the two secondary windings (3, 4) are phase shifted, and the angular position is determined from the signals, non-phase-shifted and phase shifted, from the primary winding (2) and the two secondary windings (3, 4).

9. Method according to Claim 8, in which the excitation signal (17) is temporally sinusoidal and in the first secondary winding (3) a temporally sinusoidal modulated signal (18) is induced, whose amplitude is modulated as a function of the rotation angle of the rotating machine according to a sine function, and in the second secondary winding (4) a temporally sinusoidal signal (19) is induced, whose amplitude is modulated as a function of the rotation angle of the rotating machine according to a cosine function.

10. Method according to Claim 9, in which
a first sign signal is generated, which indicates whether or not the excitation signal (20) is less than zero,
a second sign signal is generated which indicates whether or not the phase-shifted excitation signal (20) is less than zero,
trigger signals (16) are generated,
on receipt of the trigger signals (16) corresponding sample values are formed from the signals, non-phase-shifted and phase shifted, from the first and second secondary windings (3, 4) and the first and second sign signals (12, 13), and the current angular position of the rotating machine is calculated from the sample values.

11. Method according to Claim 10, in which the current angular position is calculated as

$$\alpha = \texttt{arctan(ab}_1\texttt{/ab}_2\texttt{)} + \pi \bullet \texttt{sign(ab}_2\texttt{)} \bullet \texttt{VZ\_EXITE,}$$

if a value G1 is greater than or equal to a value G2,
and as

$$\alpha = \texttt{arctan(ab}_3\texttt{/ab}_4\texttt{)} + \pi \bullet \texttt{sign(ab}_4\texttt{)} \bullet \texttt{VZ\_EXITE90,}$$

if G1 is smaller than G2,
where $\alpha$ is the current angular position, the value G1 = $ab_1^2 + ab_2^2$, the value G2 = $ab_3^2 + ab_4^2$, VZ_EXITE is the sampled signal value of the first sign signal, VZ_EXITE90 is the sampled signal value of the second sign signal, $ab_1$ is the sampled signal value of the first secondary winding (3), $ab_2$ is the sampled signal value of the second secondary winding (4), $ab_3$ is the sampled signal value of the output of the phase shifter (10) and $ab_4$ is the sampled signal value of the output of the phase shifter (11).

12. Method according to one of Claims 8 to 11, in which the signals to the primary winding (2) and from the two secondary windings (3, 4) are phase shifted through 90 degrees or an odd-numbered multiple thereof.

**Revendications**

1. Agencement pour la détermination de la position angulaire instantanée d'un objet tournant autour d'un point fixe, à l'aide d'un capteur inductif (1), qui comprend au moins un enroulement primaire (2) qui est alimenté par un signal d'excitation (17) et au moins deux enroulements secondaires (3, 4) qui y sont inductivement couplés, des signaux présentant une courbe périodique et déphasée étant produits du fait du couplage inductif dans les deux enroulements secondaires (3, 4) en fonction de l'angle de rotation,

trois déphaseurs (9, 10, 11), comportant chacun une entrée et une sortie, ayant des déphasages identiques, leurs côtés entrée étant électriquement couplés respectivement à l'enroulement primaire (2), au premier enroulement secondaire (3) et au deuxième enroulement secondaire (4), et

une unité d'évaluation (12, 13, 14, 15), qui à partir des signaux aux entrées et aux sorties des déphaseurs (9, 10, 11) détermine la position angulaire.

2. Agencement selon la revendication 1, dans lequel le signal d'excitation (17) est sinusoïdal dans le temps et, dans le premier enroulement secondaire (3), un signal (18) à modulation sinusoïdale dans le temps est induit, dont l'amplitude est modulée en fonction de l'angle de rotation de la machine tournante selon une fonction sinus, et, dans le deuxième enroulement secondaire (4), un signal sinusoïdal dans le temps (19) est induit, dont l'amplitude est modulée en fonction de l'angle de rotation de la machine tournante selon une fonction cosinus.

3. Agencement selon la revendication 2, dans lequel l'unité d'évaluation (12, 13, 14, 15) comprend :

une première unité de détermination de signe (12), qui est configurée de façon à produire un premier signal de signe, qui indique si le signal d'excitation (20) est ou non inférieur à zéro,

une deuxième unité de détermination de signe (13), qui est configurée pour produire un deuxième signal de signe, qui indique si le signal d'excitation déphasé (20) est ou non inférieur à zéro,

une unité d'échantillonnage et de blocage (14), qui est configurée pour, lors de la réception d'un signal de commande (16), former, au moment de la réception du signal de commande (16) des valeurs d'échantillonnage correspondantes, à partir des signaux non déphasés et des signaux déphasés à l'aide du déphaseur des premiers et des deuxièmes enroulements secondaires (3, 4), et à partir des signaux de départ des premières et des deuxièmes unités de détermination de signe (12, 13), et

une unité de calcul (15), qui est montée de façon à produire un signal de commande (16) pour l'unité d'échantillonnage et de blocage (14), et pour calculer, à partir des valeurs d'échantillonnage formées par l'unité d'échantillonnage et de blocage (14), la position angulaire instantanée de la machine tournante.

4. Agencement selon la revendication 3, dans lequel le dispositif de calcul (15) est monté de façon à calculer la position angulaire instantanée telle que :

$$\alpha = \mathrm{arctan}(ab_1/ab_2) + \pi.\mathrm{sign}(ab_2).\mathtt{VZ\_EXITE},$$

quand une valeur G1 est supérieure ou égale à une valeur G2, et

$$\alpha = \mathrm{arctan}(ab_3/ab_4) + \pi.\mathrm{sign}(ab_4).\mathtt{VZ\_EXITE90},$$

quand G1 est inférieur à G2,

où $\alpha$ est la position angulaire instantanée, la valeur $G1 = ab_1^2 + ab_2^2$, la valeur $G2 = ab_3^2 + ab_4^2$, VZ_EXITE est la valeur du signal échantillonné de la première unité de détermination de signe (12), VZ_EXITE90 est la valeur signal échantillonné de la deuxième unité de détermination du signe (13), $ab_1$ est la valeur du signal échantillonné du premier enroulement secondaire (3), $ab_2$ est la valeur du signal échantillonné du deuxième enroulement secondaire (3), $ab_3$ est la valeur du signal échantillonné de la sortie du déphaseur (10), et $ab_4$ est la valeur du signal échantillonné de la sortie du déphaseur (11).

5. Agencement selon les revendications 3 ou 4, dans lequel les signaux (17, 18, 19) de l'enroulement primaire (2) et de l'enroulement secondaire (3, 4) sont sans potentiel et en outre sont prévues :

une première unité de soustraction (6), qui est configurée pour convertir un signal d'excitation (17) en un signal d'excitation (20) rapporté à la masse,

une deuxième unité de soustraction (7), qui est configurée pour convertir le signal (18) du premier enroulement secondaire (3) en un signal (21) rapporté à la masse, et

une troisième unité de soustraction (8), qui est configurée pour convertir le signal (19) du deuxième enroulement secondaire (4) en un signal (22) rapporté à la masse.

**6.** Agencement selon l'une des revendications précédentes, dans lequel l'enroulement primaire (2) est relié à une unité génératrice (5) produisant le signal d'excitation (17).

**7.** Agencement selon l'une des revendications précédentes, dans lequel le déphasage de l'ensemble des déphaseurs est de 90 degrés, ou un multiple impair de ce dernier.

**8.** Procédé pour la détermination de la position angulaire instantanée d'un objet tournant autour d'un point fixe, à l'aide d'un capteur inductif (1), qui comprend au moins un enroulement primaire (2), qui est alimenté par un signal d'excitation (17), et au moins deux enroulements secondaires (3, 4), qui y sont inductivement couplés, des signaux ayant une courbe périodique et déphasée étant produits du fait du couplage inductif dans les deux enroulements secondaires (3, 4) en fonction de l'angle de rotation,
les signaux de l'enroulement primaire (2) et des deux enroulements secondaires (3, 4) subissant un déphasage, et, à partir des signaux non déphasés et des signaux déphasés de l'enroulement primaire (2) et des deux enroulements secondaires (3, 4), la position angulaire étant déterminée.

**9.** Procédé selon la revendication 8, dans lequel le signal d'excitation (17) est sinusoïdal dans le temps, et, dans le premier enroulement secondaire (3), un signal (18) à modulation sinusoïdale dans le temps est induit, dont l'amplitude est modulée en fonction de l'angle de rotation de la machine tournante selon une fonction sinus, et, dans le deuxième enroulement secondaire (4), un signal (19) sinusoïdal dans le temps est induit, dont l'amplitude est modulée en fonction de l'angle de rotation de la machine tournante à l'aide d'une fonction cosinus.

**10.** Procédé selon la revendication 9, dans lequel
un premier signal de signe est produit, qui indique si le signal d'excitation (20) est ou non inférieur à zéro,
un deuxième signal de signe est produit, qui indique si le signal d'excitation (20) déphasé est ou non inférieur à zéro,
des signaux de commande (16) sont produits,
lors de la réception des signaux de commande (16), des valeurs d'échantillonnage correspondantes sont formées à partir des signaux non déphasés et des signaux déphasés des premiers et des deuxièmes enroulements secondaires (3, 4) et des premiers et des deuxièmes signaux de signe (12, 13),
et, à partir des valeurs d'échantillonnage, la position angulaire instantanée de la machine tournante est calculée.

**11.** Procédé selon la revendication 10, dans lequel la position angulaire instantanée est calculée telle que

$$\alpha = \mathtt{arctan(ab_1/ab_2) + \pi.sign(ab_2).VZ\_EXITE,}$$

quand une valeur G1 est supérieure ou égale à une valeur G2, et

$$\alpha = \mathtt{arctan(ab_3/ab_4) + \pi.sign(ab_4).VZ\_EXITE90,}$$

quand G1 est inférieur à G2,
où $\alpha$ est la position angulaire instantanée, la valeur $G1 = ab_1^2 + ab_2^2$, la valeur $G2 = ab_3^2 + ab_4^2$, VZ_EXITE est la valeur du signal échantillonné du premier signal de signe, VZ_EXITE90 est la valeur du signal échantillonné du deuxième signal de signe, $ab_1$ est la valeur du signal échantillonné du premier enroulement secondaire (3), $ab_2$ est la valeur du signal échantillonné du deuxième enroulement secondaire (4), $ab_3$ est la valeur du signal échantillonné de la sortie du déphaseur (10) et $ab_4$ est la valeur du signal échantillonné de la sortie du déphaseur (11).

**12.** Procédé selon l'une des revendications 8 à 11, dans lequel les signaux au niveau de l'enroulement primaire (2), ainsi que des deux enroulements secondaires (3, 4), sont déphasés de 90 degrés ou d'un multiple impair de ce dernier.

FIG. 1

| | |
|---|---|
| Erregen der Primärwicklung eines Resolvers mit einem sinusförmigen potentialfreien Erregersignal | 1 |
| Umwandeln des potentialfreien Erregersignals in ein auf eine Masse bezogenes Erregersignal mittels einer ersten Differenzbildungseinheit | 2 |
| Umwandeln eines in einer ersten Sekundärspule induzierten sinusförmigen potentialfreien Signals in ein auf die Masse bezogenes sinusförmige Signal mittels einer zweiten Differenzbildungseinheit | 3 |
| Umwandeln eines in einer zweiten Sekundärspule induzierten cosinusförmigen potentialfreien Signals in ein auf die Masse bezogenes cosinusförmige Signal mittels einer dritten Differenzbildungseinheit | 4 |
| Verschieben des auf die Masse bezogenen Erregersignals um 90 Grad in der Phase mittels eines ersten Phasenschiebers | 5 |
| Verschieben des auf die Masse bezogenen sinusförmigen Signals um 90 Grad in der Phase mittels eines zweiten Phasenschiebers | 6 |

FIG. 2a

| | |
|---|---|
| Verschieben des auf die Masse bezogenen cosinusförmigen Signals um 90 Grad in der Phase mittels eines dritten Phasenschiebers | 7 |
| Mittels einer ersten Vorzeichenermittlungseinheit Bilden eines Signals mit dem Wert 1, wenn das auf die Masse bezogene Erregersignal größer Null ist und andernfalls Bilden eines Signals mit dem Wert 0 | 8 |
| Mittels einer zweiten Vorzeichenermittlungseinheit Bilden eines Signals mit dem Wert 1, wenn das auf die Masse bezogene und um 90 Grad in der Phase verschobene Erregersignal größer Null ist und andernfalls Bilden eines Signals mit dem Wert 0 | 9 |
| Bei Empfang eines Triggersignals Bilden entsprechender Abtastwerte der aus den zweiten und dritten Differenzbildungseinheiten, den zweiten und dritten Phasenschiebern und den ersten und zweiten Vorzeichenermittlungseinheiten zum Zeitpunkt des Triggersignals gebildeten Signale durch eine Sample- und Hold-Abtasteinheit | 10 |
| Durch einen Prozessor Entgegennehmen der durch die Sampleund Hold-Abtasteinheit gebildeten Abtastwerte und Errechnen der aktuellen Winkelstellung der rotierenden Maschine aus diesen | 11 |

FIG. 2b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2448350 A
- EP 0779607 A1